# EUROPEAN PATENT SPECIFICATION

(11) **EP 4 209 772 B1**
(45) Date of publication and mention of the grant of the patent: **19.03.2025**
(21) Application number: 21863091.1
(22) Date of filing: 29.12.2021
(51) Int. Cl.: G01N 1/42, G01N 1/28, G01N 1/06, G01N 35/00, B01L 3/00

(54) **FROZEN SAMPLE HOLDER HAVING IDENTIFICATION RING**
HALTER FÜR GEFRORENE PROBEN MIT EINEM IDENTIFIZIERUNGSRING
SUPPORT D'ÉCHANTILLONS CONGELÉS DOTÉ D'UN ANNEAU D'IDENTIFICATION

(30) Priority: 25.11.2021 CN 202111411326
(43) Date of publication of application: 12.07.2023
(73) Proprietor: Ding, Wei, Hangzhou, Zhejiang 310000 (CN); Shi, Yu, Changning District Shanghai 200050 (CN)
(72) Inventor: Ding, Wei, Hangzhou, Zhejiang 310000 (CN); Shi, Yu, Changning District Shanghai 200050 (CN)
(74) Representative: Bergenstråhle & Partners AB
(86) International application number: PCT/CN2021/142616
(87) International publication number: WO 2023/092807

(56) References cited:
- WO-A1-2021/067940
- CN-A- 112 284 842
- CN-A- 113 340 643
- CN-A- 113 340 643
- CN-U- 208 151 352
- CN-U- 212 871 935
- CN-U- 213 644 189
- CN-U- 214 844 325
- CN-U- 214 844 325
- US-A- 5 188 347
- US-A1- 2002 069 649
- US-A1- 2002 069 649
- US-A1- 2013 078 669
- US-A1- 2015 205 986
- US-A1- 2015 309 063
- US-A1- 2021 025 793
- US-A1- 2021 262 906

## Description

### Cross-Reference to Related Applications

The present disclosure claims the priority to the Chinese patent application filed with the Chinese Patent Office on November 25, 2021 with the filing No. 202111411326.X, and entitled "Frozen Sample Holder Having Identification Ring".

### Technical Field

The present disclosure relates to the technical field of frozen section-related equipment, and particularly to a frozen sample holder having an identification ring.

### Background

Freezing sectioning is the most widely applied method of conventional histological slide preparation techniques. Frozen sections are not only used to observe the morphological structure of normal cell tissues, but also represent a main method adopted, clinically and in scientific research, in disciplines, such as pathology and forensic science, for studying, observing, and judging the morphological changes of cell tissues, and have also been widely applied in the research of many other fields of discipline. US2021025793 shows a frozen sample holder with an identification ring.

During the process of freezing sectioning pathological tissues, it has always been a difficulty to mark frozen sample holders in a freezing microtome; although the marker can be realized by printing and pasting using papers, the papers would easily undergo accidents such as falling off after freezing, being cut by a knife or the like, which results in confused samples, causing medical malpractice.

### Summary

The present disclosure provides a frozen sample holder having an identification ring, so as to at least solve the technical problem existing in related technologies that multiple samples would easily be confused with each other due to the difficulty to mark frozen sample holders.

The invention is set out in the appended set of claims.

The embodiments of the present disclosure can realize at least following beneficial effects.

The present disclosure provides a frozen sample holder having an identification ring, comprising an identification ring structure and a frozen sample holder structure, wherein the identification ring structure is in connection with an outer wall of the frozen sample holder structure; and the identification ring structure includes an identification segment, which is configured to mark the information of a sample in the frozen sample holder structure.

In the present disclosure, by sleeving the identification ring structure over the frozen sample holder structure and marking specific information of samples on the identification ring structure, marking different samples is realized and the technical problem that samples would easily be confused with each other due to the difficulty to mark the frozen sample holder is effectively avoided, without hindering normal use of the frozen sample holder.

In summary, the present disclosure solves the technical problem existing in the related technologies that multiple samples would easily be confused with each other due to the difficulty to mark frozen sample holders.

### Brief Description of Drawings

In order to more clearly describe the technical solutions of the specific embodiments of the present disclosure or in the related technologies, the drawings required to be used in the description of the specific embodiments or the related technologies will be simply presented below.
Fig. 1 is a structural schematic diagram showing a frozen sample holder having an identification ring provided in a first embodiment of the present disclosure in a top view;
Fig. 2 is a structural schematic diagram showing the identification ring structure of the frozen sample holder having an identification ring shown in Fig. 1 in a bottom view;
Fig. 3 is a structural schematic diagram showing the frozen sample holder structure of the frozen sample holder having an identification ring shown in Fig. 1 in a side view;
Fig. 4 is a structural schematic diagram showing the frozen sample holder having an identification ring shown in Fig. 1 in a side view; and
Fig. 5 is a structural schematic diagram showing a frozen sample holder having an identification ring provided in a second embodiment of the present disclosure in a top view.

Reference signs: 1-identification ring structure; 11-identification ring body; 12-identification plate; 13-fixture block; 14-protrusion; 2-frozen sample holder structure; 21-frozen sample holder body; 211-groove body; 212-boss; and 22-clamping groove.

### Detailed Description of Embodiments

In order to make the objects, the technical solutions, and the advantages of the embodiments of the present disclosure clearer, the technical solutions in the embodiments of the present disclosure will be clearly and comprehensively described below with reference to the accompanying drawings in the embodiments of the present disclosure.

It shall be noted that similar reference signs and letters represent similar items in the following drawings, thus, once a certain item is defined in one figure, no further definition and explanation of this item is necessary in subsequent figures.

**In** the description of the present disclosure, it shall be clarified that orientation or position relationships indicated by terms such as "upper", "lower", "vertical", "horizontal", "inner", and "outer" are orientation or position relationships shown based on the drawings, or orientation or position relationships in which the product of this disclosure is conventionally placed during use, merely for the purpose of facilitating the description of the present disclosure and for simplifying the description, rather than indicating or implying that a specified device or element must be in a specific orientation, and be constructed and operated in a specific orientation, and therefore cannot be construed as limiting the present disclosure. **In** addition, terms such as "first", "second", and "third" are used merely for purpose of differentiated description, and cannot be construed as indicating or implying to have importance in relativity.

In addition, terms such as "horizontal" and "vertical" do not mean that the components are required to be absolutely horizontal or pendulous, on the contrary, they may be slightly inclined. For example, the term "horizontal" only means that the direction thereof is more horizontal relative to "vertical", rather than indicating that this structure must be completely horizontal, on the contrary, this structure may be slightly inclined.

In the description of the present disclosure, it shall be further clarified that, unless otherwise expressly specified and defined, terms such as "provide", "mount", and "connect" shall be construed in a broad sense. For example, it may be fixed connection, or detachable connection, or integrated connection; it may be mechanical connection, or electrical connection; and it may be direct connection, or indirect connection via an intermediate media, or inner communication between two elements. For a person ordinarily skilled in the art, the specific meanings of the above-mentioned terms in the present disclosure could be construed in accordance with specific circumstances.

Hereinafter, some embodiments of the present disclosure will be described in detail with reference to the accompanying drawings. The following embodiments and the features in the embodiments may be combined with each other without conflicts.

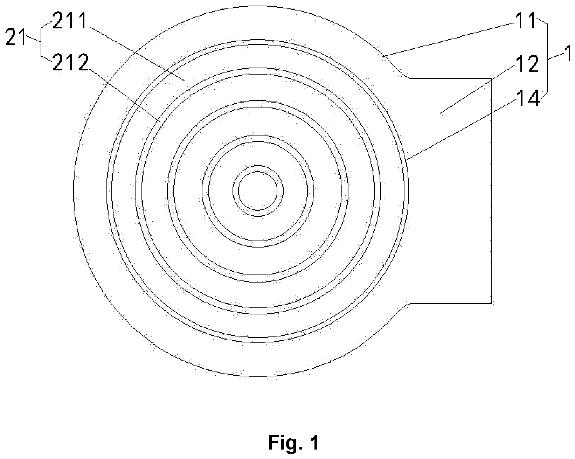

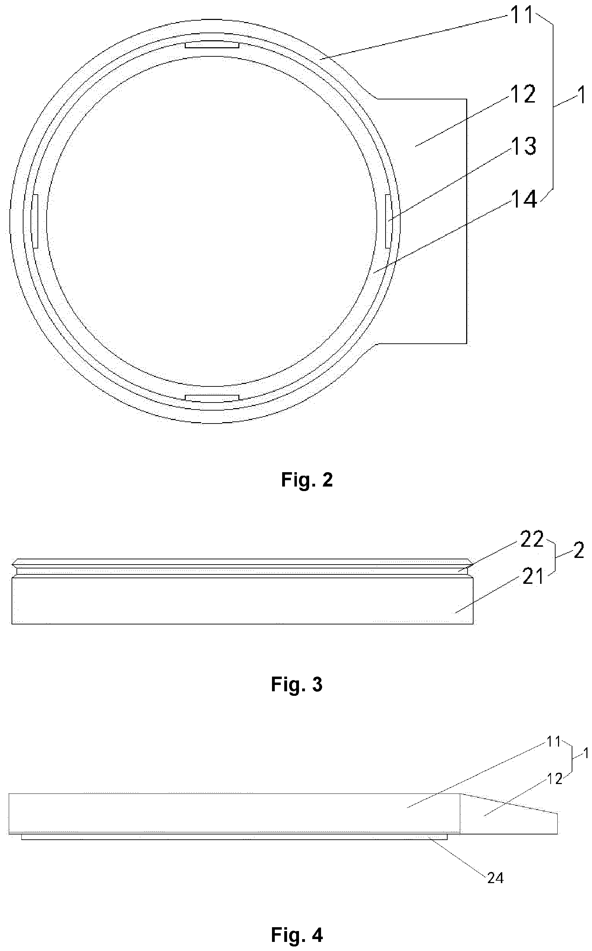

The present disclosure provides a frozen sample holder having an identification ring, and referring to Fig. 1 and Fig. 3, this frozen sample holder having an identification ring comprises an identification ring structure 1 and a frozen sample holder structure 2, and the identification ring structure 1 is in connection with an outer wall of the frozen sample holder structure 2; and the identification ring structure 1 includes an identification segment, which is configured to mark the information of a sample in the frozen sample holder structure 2.

The frozen sample holder having an identification ring provided in the embodiments of the present disclosure at least solves the technical problem existing in the related technologies that multiple samples would easily be confused with each other due to the difficulty to mark frozen sample holders.

The present disclosure provides a frozen sample holder having an identification ring, comprising an identification ring structure 1 and a frozen sample holder structure 2, wherein the identification ring structure 1 is in connection with an outer wall of the frozen sample holder structure 2; and the identification ring structure 1 includes an identification segment, which is configured to mark the information of a sample in the frozen sample holder structure 2

In the present disclosure, by sleeving the identification ring structure 1 over the frozen sample holder structure 2 and marking specific information of samples on the identification ring structure 1, the marking of different samples is realized and the technical problem that samples would easily be confused with each other due to the difficulty to mark the frozen sample holder is effectively avoided, without hindering normal use of the frozen sample holder.

In the present embodiment, referring to Fig. 2, the identification ring structure 1 includes an identification ring body 11 and an identification plate 12, and the identification ring body 11 and the identification plate 12 are in connection with each other; the identification ring body 11 is provided with an accommodating space, and the frozen sample holder structure 2 is at least partially accommodated in the accommodating space and is in connection with the identification ring body 11; and the identification segment is provided on a face of the identification plate 12 at the same side relative to the face where the frozen sample holder structure 2 is placed.

Specifically, the identification ring body 11 and the identification plate 12 are formed integrally, the identification ring body 11 is in an annular structure, and an area enclosed by an inner ring wall thereof is configured as the accommodating space, which is a cylindrical space, and the frozen sample holder structure 2 is arranged in this accommodating space and is fixed relative to the identification ring body 11; and the identification plate 12 is in connection with an outer side wall of the identification ring body 11, the identification segment provided on the upper surface of the identification plate 12 is configured to mark the QR code and the pathological number of a sample in the frozen sample holder structure 2.

Referring to Fig. 2, the identification ring structure 1 further includes a fixture block 13, which is in connection with the identification ring body 11 and is located in the accommodating space; the frozen sample holder structure 2 includes a frozen sample holder body 21 and a clamping groove 22; the clamping groove 22 is arranged along the circumferential direction of the frozen sample holder body 21, and the fixture block 13 is snapped in the clamping groove 22 so as to connect the frozen sample holder body 21 with the identification ring body 11.

Specifically, the inner ring wall of the identification ring body 11 is provided with the fixture block 13, and the fixture block 13 is snapped in the clamping groove 22 on an edge of the frozen sample holder body 21 so as to support the frozen sample holder body 21 in a vertical direction; and the outer edge of the frozen sample holder body 21 abuts against the inner edge of the identification ring body 11.

Optionally, the identification ring structure 1 further includes a protrusion 14, the protrusion 14 is arranged along the circumferential direction of the inner ring wall of the identification ring body 11, the protrusion 14 abuts against the top surface of the frozen sample holder body 21, and the protrusion 14 is located above the fixture block 13

Specifically, the protrusion 14 is arranged along the circumferential direction of the top of the inner ring wall of the identification ring body 11, hereby forming an annular limiting baffle plate, and when the identification ring body 11 is sleeved over the frozen sample holder body 21, the top surface of the frozen sample holder body 21 abuts against the bottom surface of the protrusion 14, hereby effectively avoiding the protruding of the frozen sample holder body 21 from the top of the identification ring body 11; and a surrounding structure is formed at the edge of the top surface of the frozen sample holder body 21 between the protrusion 14 and the identification ring body 11, hereby avoiding damages to an edge of the top surface of the frozen sample holder body 21 due to bumps.

In the present embodiment, a plurality of fixture blocks 13 is provided, the plurality of fixture blocks 13 is evenly distributed along the circumferential direction of the accommodating space.

Specifically, the plurality of fixture blocks 13 is evenly distributed on the inner ring wall of the identification ring body 11, the fixture block 13 is snapped in the clamping groove 22 on the edge of the frozen sample holder body 21, hereby providing supporting for the frozen sample holder body 21 in a vertical direction and maintaining the balance of the frozen sample holder body 21.

In the present embodiment, the frozen sample holder body 21 includes a groove body 211 and a boss 212, and the groove body 211 and the boss 212 are arranged coaxially; and a plurality of the groove bodies 211 and a plurality of the bosses 212 are provided, and the plurality of groove bodies 211 and the plurality of bosses 212 are alternately arranged from outside to inside in a surrounding manner.

Specifically, the plurality of groove bodies 211 and the plurality of bosses 212 are alternately arranged on the top surface of the frozen sample holder body 21 from outside to inside in a surrounding manner, the boss 212 is in an annular structure, and respective adjacent bosses 212 are arranged at an equal spacing distance, and the groove body 211 is arranged between adjacent bosses 212, and it can be determined accordingly that the groove body 211 is also annular.

During use, an operator places sample sections on the top surface of the frozen sample holder body 21, and a rough surface is formed because of the plurality of groove bodies 211 and the plurality of bosses 212 on the top surface of the frozen sample holder body 21, which effectively avoids the sample sections from sliding on the top surface of the frozen sample holder body 21.

The bottom surface of the groove body 211 is inclined in a direction towards the center from edge of the frozen sample holder body 21. The multiple groove bodies 211 are respectively arranged between adjacent bosses 212, and the bottom surface of the groove body 211 is inclined in a direction towards the center from the edge of the frozen sample holder body 21, which is conducive to the gathering of samples towards the center of the top surface of the frozen sample holder body 21.

In an optional example of the present embodiment, referring to Fig. 4, the bottom of the frozen sample holder body 21 protrudes from the lower end of the identification ring body 11. After that the frozen sample holder body 21 is placed on a machine, the bottom surface of the frozen sample holder body 21 is in contact with the machine, hereby avoiding the problem that the frozen sample holder body 21 is inclined after being placed.

In an optional example of the present embodiment, the face of the identification ring body 11 away from the placement face of the frozen sample holder structure 2 has rounded inner and outer edges.

Specifically, the inner and outer side edges of the lower end of the identification ring body 11 are formed at a certain radian, such that the frozen sample holder body 21 is not in contact with the lower end of the identification ring body 11 and a certain gap is retained; and the process of installing the whole device on the machine is more facilitated, without colliding with the machine.

In an optional example of the present embodiment, the upper surface of the identification plate 12 is inclined downwards in a direction towards the side away from the placement face of the frozen sample holder structure 2. After that the frozen sample holder body 21 has been placed, the identification segment on the upper surface of the identification plate 12 can face the operator in an angle facilitating the observation, which facilitates the recognition, the code-scanning, the recording or the like of the operator.

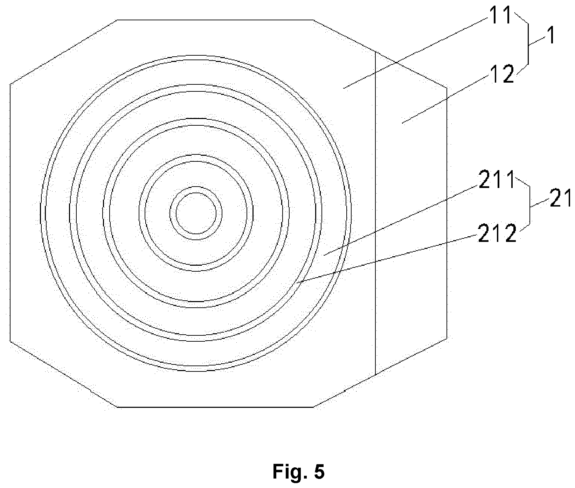

In some further embodiments of the present disclosure, a frozen sample holder having an identification ring is provided, and referring to Fig. 5, the identification ring body 11 and the identification plate 12 of the frozen sample holder having an identification ring are integrally formed, and the both are of a polygon structure of bilateral symmetry. This structure is conducive to improving the balance and the stability of the identification ring structure 1 and the frozen sample holder structure 2 after that the frozen sample holder structure 2 is placed.

### Industrial Applicability

The present disclosure provides a frozen sample holder having an identification ring, comprising an identification ring structure and a frozen sample holder structure, wherein the identification ring structure is in connection with an outer wall of the frozen sample holder structure; and the identification ring structure includes an identification segment, which is configured to mark the information of a sample in the frozen sample holder structure. The present disclosure solves the technical problem existing in the operating process of freezing sectioning all along that multiple samples would easily be confused with each other due to the difficulty to mark frozen sample holders.

In addition, it could be understood that the frozen sample holder having an identification ring according to the present disclosure is reproduceable, and can be used in various industrial applications. For example, the frozen sample holder having an identification ring according to the present disclosure can be applied to the technical field of freezing sectioning-related equipment.

## Claims

1. A frozen sample holder having an identification ring, comprising an identification ring structure (1) and a frozen sample holder structure (2), wherein the identification ring structure (1) is connected with an outer wall of the frozen sample holder structure (2); and
the identification ring structure (1) comprises an identification segment, wherein the identification segment is configured to be marked with information of a sample in the frozen sample holder structure (2),
wherein the identification ring structure (1) comprises an identification ring body (11) and an identification plate (12), wherein the identification ring body (11) and the identification plate (12) are connected with each other;
the identification ring body (11) is provided with an accommodating space, and the frozen sample holder structure (2) is at least partially accommodated in the accommodating space and is connected with the identification ring body (11); and
the identification segment is provided on a face of the identification plate (12) at the same side relative to a face where the frozen sample holder structure (2) is placed,
wherein the frozen sample holder structure (2) comprises a frozen sample holder body (21) and a clamping groove (22), and the clamping groove (22) is arranged along a circumferential direction of the frozen sample holder body (21);
wherein the frozen sample holder body (21) comprises a groove body (211) and a boss (212), the groove body (211) and the boss (212) are arranged coaxially, a plurality of groove bodies (211) and a plurality of bosses (212) are provided, and the plurality of groove bodies (211) and the plurality of bosses (212) are alternately arranged from outside to inside in a surrounding manner,
**characterized in that**:
the identification ring structure (1) further comprises a plurality of fixture blocks (13), wherein the plurality of fixture block (13) is connected with the identification ring body (11), located in the accommodating space, and distributed at an equal interval along a circumferential direction of the accommodating space, and the plurality of fixture blocks (13) are snapped in the clamping groove (22) so as to connect the frozen sample holder body (21) with the identification ring body (11), and
a bottom surface of the groove body (211) is inclined in a direction towards a center from an edge of the frozen sample holder body (21).

2. The frozen sample holder having an identification ring according to claim 1, wherein the identification ring body (11) and the identification plate (12) are formed integrally, the identification ring body (11) is in an annular structure, and an area enclosed by an inner ring wall of the identification ring body (11) is provided as the accommodating space, wherein the accommodating space is a cylindrical space, and the frozen sample holder structure (2) is arranged in the accommodating space and is fixed relative to the identification ring body (11); and
the identification plate (12) is connected with an outer side wall of the identification ring body (11), and the identification segment is arranged on an upper surface of the identification plate (12), so as to be marked with a QR code and a pathological number of a sample in the frozen sample holder structure (2).

3. The frozen sample holder having an identification ring according to claim 1 or 2, wherein the plurality of fixture blocks (13) are arranged on the inner ring wall of the identification ring body (11), and the plurality of fixture blocks (13) are snapped in the clamping groove (22) on an edge of the frozen sample holder body (21) so as to support the frozen sample holder body (21) in a vertical direction; and an outer edge of the frozen sample holder body (21) abuts against an inner edge of the identification ring body (11).

4. The frozen sample holder having an identification ring according to any one of claims 1 to 3, wherein the identification ring structure (1) further comprises a protrusion (14), the protrusion (14) is arranged along a circumferential direction of the inner ring wall of the identification ring body (11), the protrusion (14) abuts against a top surface of the frozen sample holder body (21), and the protrusion (14) is located above the fixture block (13).

5. The frozen sample holder having an identification ring according to claim 4, wherein the protrusion (14) is arranged along a circumferential direction of a top of the inner ring wall of the identification ring body (11), hereby forming an annular limiting baffle plate, and when the identification ring body (11) is sleeved over the frozen sample holder body (21), the top surface of the frozen sample holder body (21) abuts against a bottom surface of the protrusion (14); and a surrounding structure is formed at an edge of the top surface of the frozen sample holder body (21) between the protrusion (14) and the identification ring body (11).

6. The frozen sample holder having an identification ring according to any one of claims 1 to 5, wherein the boss (212) is in an annular structure, and respective adjacent bosses (212) are arranged at an equal spacing distance, the groove body (211) is arranged between adjacent bosses (212), and the groove body (211) is annular.

7. The frozen sample holder having an identification ring according to any one of claims 1 to 6, wherein a bottom of the frozen sample holder body (21) protrudes from a lower end of the identification ring body (11).

8. The frozen sample holder having an identification ring according to any one of claims 1 to 7, wherein a face of the identification ring body (11) away from the face where the frozen sample holder structure (2) is placed has rounded inner and outer edges.

9. The frozen sample holder having an identification ring according to claim 8, wherein inner and outer side edges of a lower end of the identification ring body (11) are formed at a certain radian, such that the frozen sample holder body (21) is not in contact with the lower end of the identification ring body (11), so as to retain a certain gap.

10. The frozen sample holder having an identification ring according to any one of claims 1 to 9, wherein an upper surface of the identification plate (12) is inclined downwards in a direction towards a side away from the face where the frozen sample holder structure (2) is placed.

## Patentansprüche

1. Halter für eine gefrorene Probe, die einen Identifizierungsring aufweist, der eine Identifizierungsringringstruktur (1) und eine Halterstruktur für eine gefrorene Probe (2) umfasst, wobei die Identifizierungsringringstruktur (1) mit einer Außenwand der Halterstruktur für eine gefrorene Probe (2) verbunden ist; und
die Identifizierungsringstruktur (1) ein Identifizierungssegment umfasst, wobei das Identifizierungssegment konfiguriert ist, um mit Informationen einer Probe in der Halterstruktur für eine gefrorene Probe (2) markiert zu werden,
wobei die Identifizierungsringstruktur (1) einen Identifizierungsringkörper (11) und eine Identifizierungsplatte (12) umfasst, wobei der Identifizierungsringkörper (11) und die Identifizierungsplatte (12) miteinander verbunden sind;
der Identifizierungsringkörper (11) mit einem Aufnahmeraum bereitgestellt ist, und die Halterstruktur für eine gefrorene Probe (2) zumindest teilweise in dem Aufnahmeraum aufgenommen, und mit dem Identifizierungsringkörper (11) verbunden ist; und
das Identifizierungssegment auf einer Fläche der Identifizierungsplatte (12) auf derselben Seite in Bezug zu einer Fläche bereitgestellt ist, auf der die Haltestruktur für eine gefrorene Probe (2) platziert ist,
wobei die Halterstruktur für eine gefrorene Probe (2) einen Halterkörper für eine gefrorene Probe (21) und eine Klemmnut (22) umfasst und die Klemmnut (22) entlang einer Umfangsrichtung des Halterkörpers für eine gefrorene Probe (21) angeordnet ist;
wobei der Halterkörper für eine gefrorene Probe (21) einen Nutkörper (211) und eine Erhebung (212) umfasst, der Nutkörper (211) und die Erhebung (212) koaxial angeordnet sind, eine Vielzahl von Nutkörpern (211) und eine Vielzahl von Erhebungen (212) bereitgestellt sind und die Vielzahl von Nutkörpern (211) und die Vielzahl von Erhebungen (212) abwechselnd von außen nach innen umgebend angeordnet sind,
**dadurch gekennzeichnet, dass**:
die Identifizierungsringstruktur (1) weiter eine Vielzahl von Befestigungsblöcken (13) umfasst, wobei die Vielzahl von Befestigungsblöcken (13) mit dem Identifizierungsringkörper (11) verbunden ist, sich im Aufnahmeraum befindet und in gleichmäßigem Intervall entlang einer Umfangsrichtung des Aufnahmeraums verteilt ist, und die Vielzahl von Befestigungsblöcken (13) in die Klemmnut (22) eingeschnappt ist, um den Halterkörper für eine gefrorene Probe (21) mit dem Identifizierungsringkörper (11) zu verbinden, und
eine Bodenoberfläche des Nutkörpers (211) in einer Richtung zu einer Mitte von einer Kante des Halterkörpers für eine gefrorene Probe (21) geneigt ist.

2. Halter für eine gefrorene Probe, der einen Identifizierungsring nach Anspruch 1 aufweist, wobei der Identifizierungsringkörper (11) und die Identifizierungsplatte (12) in einem Stück gebildet sind, der Identifizierungsringkörper (11) aus einer ringförmigen Struktur ist und ein von einer inneren Ringwand des Identifizierungsringkörpers (11) eingeschlossener Bereich als Aufnahmeraum bereitgestellt ist, wobei der Aufnahmeraum ein zylindrischer Raum ist und die Halterstruktur für eine gefrorene Probe (2) in dem Aufnahmeraum angeordnet, und in Bezug zum Identifizierungsringkörper (11) fixiert ist; und
die Identifizierungsplatte (12) mit einer äußeren Seitenwand des Identifizierungsringkörpers (11) verbunden ist und das Identifizierungssegment auf einer oberen Oberfläche der Identifizierungsplatte (12) angeordnet ist, um mit einem QR-Code und einer pathologischen Nummer einer Probe in der Halterstruktur für eine gefrorene Probe (2) markiert zu sein.

3. Halter für eine gefrorene Probe, die einen Identifizierungsring nach Anspruch 1 oder 2 aufweist, wobei die Vielzahl von Befestigungsblöcken (13) an der inneren Ringwand des Identifizierungsringkörpers (11) angeordnet ist und die Vielzahl von Befestigungsblöcken (13) in die Klemmnut (22) an einer Kante des Halterkörpers für eine gefrorene Probe (21) eingeschnappt ist, um den Halterkörper für eine gefrorene Probe (21) in einer vertikalen Richtung zu stützen; und eine Außenkante des Halterkörpers für eine gefrorene Probe (21) an einer Innenkante des Identifizierungsringkörpers (11) anliegt.

4. Halter für eine gefrorene Probe, die einen Identifizierungsring nach einem der Ansprüche 1 bis 3 aufweist, wobei die Identifizierungsringstruktur (1) weiter einen Vorsprung (14) umfasst, der Vorsprung (14) entlang einer Umfangsrichtung der inneren Ringwand des Identifizierungsringkörpers (11) angeordnet ist, der Vorsprung (14) an einer oberen Oberfläche des Halterkörpers für eine gefrorene Probe (21) anliegt und der Vorsprung (14) sich über dem Befestigungsblock (13) befindet.

5. Halter für eine gefrorene Probe, die einen Identifizierungsring nach Anspruch 4 aufweist, wobei der Vorsprung (14) entlang einer Umfangsrichtung einer Oberseite der inneren Ringwand des Identifizierungsringkörpers (11) angeordnet ist und hierdurch eine ringförmige begrenzende Prallplatte bildet, und wenn der Identifizierungsringkörper (11) über den Halterkörper für eine gefrorene Probe (21) gestülpt wird, die obere Oberfläche des Halterkörpers für eine gefrorene Probe (21) an einer unteren Oberfläche des Vorsprungs (14) anliegt; und eine umgebende Struktur an einer Kante der oberen Oberfläche des Halterkörpers für eine gefrorene Probe (21) zwischen dem Vorsprung (14) und dem Identifizierungsringkörper (11) gebildet wird.

6. Halter für eine gefrorene Probe, die einen Identifizierungsring nach einem der Ansprüche 1 bis 5 aufweist, wobei die Erhebung (212) eine ringförmige Struktur aufweist und jeweils benachbarte Erhebungen (212) in gleicher Abstandsentfernung angeordnet sind, wobei der Nutkörper (211) zwischen benachbarten Erhebungen (212) angeordnet ist und der Nutkörper (211) ringförmig ist.

7. Halter für eine gefrorene Probe, die einen Identifizierungsring nach einem der Ansprüche 1 bis 6 aufweist, wobei eine Unterseite des Halterkörpers für eine gefrorene Probe (21) aus einem unteren Ende des Identifizierungsringkörpers (11) herausragt.

8. Halter für eine gefrorene Probe, die einen Identifizierungsring nach einem der Ansprüche 1 bis 7 aufweist, wobei eine Fläche des Identifizierungsringkörpers (11), die von der Fläche weg weist, auf der die Halterstruktur für eine gefrorene Probe (2) platziert ist, abgerundete Innen- und Außenkanten aufweist.

9. Halter für eine gefrorene Probe, die einen Identifizierungsring nach Anspruch 8 aufweist, wobei innere und äußere Seitenkanten eines unteren Endes des Identifizierungsringkörpers (11) in einem bestimmten Bogenmaß gebildet sind, sodass der Halterkörper für eine gefrorene Probe (21) nicht mit dem unteren Ende des Identifizierungssringkörpers (11) in Kontakt ist, um so einen bestimmten Spalt beizubehalten.

10. Halter für eine gefrorene Probe, die einen Identifizierungsring nach einem der Ansprüche 1 bis 9 aufweist, wobei eine obere Oberfläche der Identifizierungsplatte (12) nach unten in Richtung einer Seite geneigt ist, die von der Fläche weg weist, auf der die Halterstruktur für eine gefrorene Probe (2) platziert ist.

## Revendications

1. Porte-échantillon congelé présentant un anneau d'identification, comprenant une structure d'anneau d'identification (1) et une structure de porte-échantillon congelé (2), dans lequel la structure d'anneau d'identification (1) est reliée à une paroi extérieure de la structure de porte-échantillon congelé (2) ; et
la structure d'anneau d'identification (1) comprend un segment d'identification, dans lequel le segment d'identification est configuré pour porter des informations d'un échantillon dans la structure de porte-échantillon congelé (2),
dans lequel la structure d'anneau d'identification (1) comprend un corps d'anneau d'identification (11) et une plaque d'identification (12), dans lequel le corps d'anneau d'identification (11) et la plaque d'identification (12) sont reliés l'un à l'autre ;
le corps d'anneau d'identification (11) est doté d'un espace de réception, et la structure de porte-échantillon congelé (2) est au moins partiellement reçue dans l'espace de réception et est reliée au corps d'anneau d'identification (11) ; et
le segment d'identification est disposé sur une face de la plaque d'identification (12) du même côté par rapport à une face où est placée la structure de porte-échantillon congelé (2),
dans lequel la structure de porte-échantillon congelé (2) comprend un corps de porte-échantillon congelé (21) et une rainure de serrage (22), et la rainure de serrage (22) est agencée le long d'une direction circonférentielle du corps de porte-échantillon congelé (21) ;
dans lequel le corps de porte-échantillon congelé (21) comprend un corps de rainure (211) et un bossage (212), le corps de rainure (211) et le bossage (212) sont agencés de manière coaxiale, une pluralité de corps de rainure (211) et une pluralité de bossages (212) sont présents, et la pluralité de corps de rainure (211) et la pluralité de bossages (212) sont agencés en alternance de l'extérieur vers l'intérieur sur tout le contour,
**caractérisé en ce que** :
la structure d'anneau d'identification (1) comprend en outre une pluralité de blocs de fixation (13), dans lequel la pluralité de blocs de fixation (13) sont reliés au corps d'anneau d'identification (11), situé dans l'espace de réception, et répartis à intervalle égal le long d'une direction circonférentielle de l'espace de réception, et la pluralité de blocs de fixation (13) sont encliquetés dans la rainure de serrage (22) de manière à relier le corps de porte-échantillon congelé (21) au corps d'anneau d'identification (11), et
une surface inférieure du corps de rainure (211) est inclinée dans une direction vers un centre à partir d'un bord du corps de porte-échantillon congelé (21).

2. Porte-échantillon congelé présentant un anneau d'identification selon la revendication 1, dans lequel le corps d'anneau d'identification (11) et la plaque d'identification (12) sont formés d'un seul tenant, le corps d'anneau d'identification (11) se présente sous la forme d'une structure annulaire, et une zone entourée par une paroi annulaire intérieure du corps d'anneau d'identification (11) fait office d'espace de réception, dans lequel l'espace de réception est un espace cylindrique, et la structure de porte-échantillon congelé (2) est agencée dans l'espace de réception et est fixée par rapport au corps d'anneau d'identification (11) ; et
la plaque d'identification (12) est reliée à une paroi latérale extérieure du corps d'anneau d'identification (11), et le segment d'identification est agencé sur une surface supérieure de la plaque d'identification (12), de manière à porter un code QR et un numéro pathologique d'un échantillon dans la structure de porte-échantillon congelé (2).

3. Porte-échantillon congelé présentant un anneau d'identification selon la revendication 1 ou 2, dans lequel la pluralité de blocs de fixation (13) sont agencés sur la paroi annulaire intérieure du corps d'anneau d'identification (11), et la pluralité de blocs de fixation (13) sont encliquetés dans la rainure de serrage (22) sur un bord du corps de porte-échantillon congelé (21) de manière à soutenir le corps de porte-échantillon congelé (21) dans une direction verticale ; et un bord extérieur du corps de porte-échantillon congelé (21) vient en butée contre un bord intérieur du corps d'anneau d'identification (11).

4. Porte-échantillon congelé présentant un anneau d'identification selon l'une quelconque des revendications 1 à 3, dans lequel la structure d'anneau d'identification (1) comprend en outre une saillie (14), la saillie (14) est agencée le long d'une direction circonférentielle de la paroi annulaire intérieure du corps d'anneau d'identification (11), la saillie (14) bute contre une surface supérieure du corps de porte-échantillon congelé (21), et la saillie (14) est située au-dessus du bloc de fixation (13).

5. Porte-échantillon congelé présentant un anneau d'identification selon la revendication 4, dans lequel la saillie (14) est agencée le long d'une direction circonférentielle d'une partie supérieure de la paroi annulaire intérieure du corps d'anneau d'identification (11), formant ainsi une plaque déflectrice de limitation annulaire, et lorsque le corps d'anneau d'identification (11) est emmanché sur le corps de porte-échantillon congelé (21), la surface supérieure du corps de porte-échantillon congelé (21) vient en butée contre une surface inférieure de la saillie (14) ; et une structure périphérique est formée au niveau d'un bord de la surface supérieure du corps de porte-échantillon congelé (21) entre la saillie (14) et le corps d'anneau d'identification (11).

6. Porte-échantillon congelé présentant un anneau d'identification selon l'une quelconque des revendications 1 à 5, dans lequel le bossage (212) est dans une structure annulaire, et les bossages adjacents respectifs (212) sont agencés à une distance d'espacement égale, le corps de rainure (211) est agencé entre les bossages adjacents (212), et le corps de rainure (211) est annulaire.

7. Porte-échantillon congelé présentant un anneau d'identification selon l'une quelconque des revendications 1 à 6, dans lequel une partie inférieure du corps de porte-échantillon congelé (21) fait saillie à partir d'une extrémité inférieure du corps d'anneau d'identification (11).

8. Porte-échantillon congelé présentant un anneau d'identification selon l'une quelconque des revendications 1 à 7, dans lequel une face du corps d'anneau d'identification (11) éloignée de la face où la structure de porte-échantillon congelé (2) est placée présente des bords intérieur et extérieur arrondis.

9. Porte-échantillon congelé présentant un anneau d'identification selon la revendication 8, dans lequel les bords latéraux intérieur et extérieur d'une extrémité inférieure du corps d'anneau d'identification (11) sont formés à un certain radian, de telle sorte que le corps de porte-échantillon congelé (21) n'est pas en contact avec l'extrémité inférieure du corps d'anneau d'identification (11), de manière à conserver un certain espace.

10. Porte-échantillon congelé présentant un anneau d'identification selon l'une quelconque des revendications 1 à 9, dans lequel une surface supérieure de la plaque d'identification (12) est inclinée vers le bas dans une direction vers un côté éloigné de la face où la structure de porte-échantillon congelé (2) est placée.
